# EUROPEAN PATENT SPECIFICATION

(11) **EP 4 047 763 B1**
(45) Date of publication and mention of the grant of the patent: **15.11.2023**
(21) Application number: 20817052.2
(22) Date of filing: 14.10.2020
(51) Int. Cl.: H02B 13/02, H02B 13/035

(54) **ELECTRICAL SWITCHGEAR FOR ELECTRIC POWER GENERATION INSTALLATIONS**
SCHALTANLAGE FÜR STROMERZEUGUNGSSYSTEME
APPAREILLAGE DE COMMUTATION POUR INSTALLATIONS DE PRODUCTION D'ÉNERGIE ÉLECTRIQUE

(30) Priority: 14.10.2019 ES 201931678 U
(43) Date of publication of application: 24.08.2022
(73) Proprietor: Ormazabal Y Cia S.L.U., 48140 Igorre (Bizkaia) (ES)
(72) Inventor: RODRIGUEZ, Julio, 48140 IGORRE (Bizkaia) (ES); BARRUTIA URQUIJO, Agurtzane, 48140 IGORRE (Bizkaia) (ES); RANEDO TORRES, Luis, 48140 IGORRE (Bizkaia) (ES); PATINO MARBAN, Ricardo, 48140 IGORRE (Bizkaia) (ES); SEBASTIÁN MARTIN, Sergio, 48140 IGORRE (Bizkaia) (ES); SANCHEZ RUIZ, Juan, Antonio, 48140 IGORRE (Bizkaia) (ES)
(74) Representative: Herrero & Asociados, S.L.
(86) International application number: PCT/ES2020/070621
(87) International publication number: WO 2021/074469

(56) References cited:
- EP-A1- 0 224 051
- WO-A1-2014/201475
- DE-A1-102012 215 246
- Lucy Electric: "SABRE GIS Ring Main Unit up to 24kV with vacuum circuit breaker", , 1 April 2019 (2019-04-01), XP055773321, Retrieved from the Internet: URL:https://lucyelectric-production-assets .s3.eu-west-2.amazonaws.com/2019/04/Sabre- _-3008-2.pdf [retrieved on 2021-02-08]
- Mesa Energy Solutions: "CAS secondary distribution switchgear (celdas de distribución secundaria)", , 31 August 2011 (2011-08-31), pages 1-12, XP055773100, Retrieved from the Internet: URL:https://www.mesa.es/productos/pdf/0MES A-310%20CAS.pdf [retrieved on 2021-02-08]
- Siemens Ag: "Gas-Insulated Switchgear -Blue GIS Vacuum Circuit Breaker and Clean Air", , 15 August 2019 (2019-08-15), XP055773101, Retrieved from the Internet: URL:https://construproductos.com/archivos/ GISBLUE.pdf [retrieved on 2021-02-08]
- Abb: "Multifunktionale Schaltanlagen PASS M00 72,5 kV Flexible und kompakte Schaltanlagen- Lösungen für windparks", , 20 January 2013 (2013-01-20), XP055773110, Retrieved from the Internet: URL:https://library.e.abb.com/public/0a417 39a155e5a20c1257b420029c42d/BR_HV-PASS-72- 5_WF(DE)C_2GJA708616%2001.2013.pdf [retrieved on 2021-02-08]

## Description

### OBJECT OF THE INVENTION

The present invention has its field of application in electrical power generation installations, such as wind farms where electricity is generated by wind energy or photovoltaic parks where electricity is generated by solar energy. Specifically, it is applicable in said generation installations which comprise an electrical switchgear to perform the interconnection to the electrical power distribution network, said electrical switchgear being equipped to perform the functions of protecting the LV/MV transformer and connecting to medium voltage cables of the power generation installation.

### BACKGROUND OF THE INVENTION

At present, the electrical switchgear used to interconnect electrical power generation installations, such as wind turbine towers or photovoltaic parks, to the electrical power distribution network is installed usually in metallic enclosures, called cells. These cells that comprise the electrical switchgear are of a modular type and depending on the configuration of the electrical network, the following modular units may be available:
- Riser unit: made up of a cable input to the main busbar of the cell, which may have the possibility of connecting to ground with an earthing switch. The line input to the downstream generation installations is carried out through this unit.
- Line unit with disconnecting switch: electrical switchgear of gas breaking and insulation, which may contain inside a load-break switch with three switching positions: connection - disconnecting - earthing. The input or output of the line from the previous generation installations is carried out through this unit, facilitating the operation and maintenance of the wind or photovoltaic farms.
- Circuit breaker protection unit: electrical switchgear comprising a vacuum circuit-breaker with two switching positions: making - breaking, a disconnector with three switching positions: connecting - disconnecting - earthing, current transformers, etc.

Modular metal cells or enclosures can be installed in electrical power generation installations, for example as inside wind turbine towers, inside an enclosure located next to the wind turbines or in photovoltaic installation enclosures, etc., wherein they are introduced through the door one by one and then coupled with one another inside the installations.

Due to the shortage of space inside the installations, such as wind turbine towers, for the coupling between metallic enclosures or cells and their proper installation, including wiring etc., there is the disadvantage of having little freedom of movement for installation personnel and therefore greater complexity to carry out installation work, greater risk of making installation errors and greater risk of accidents of installation personnel, which is why the possibilities of operation are often restricted, such as for example, the operation of the switchgear on site is restricted and it is only allowed to do it remotely, thus avoiding, for example, the presence of personnel in the event of an internal defect. This implies that compactness of pieces of equipment is desirable to be able to place them in safer and more ergonomic locations that allow normal operation, as well as the possibility of implementing new functionalities such as cells dedicated to energy measurement.

In the particular case of wind or photovoltaic parks, the topology or electrical diagram of connection to the electrical distribution network that is usually used is the so-called radial or single feeder. In this type of diagram, the different generating stations are connected along various branches that emerge from the HV/MV substation. These branches make up the installation and connect a series of generation installations to each other. The wind turbines or photovoltaic panels are connected to the radial electrical diagram through their transformation station that comprises the mentioned electrical switchgear.

The reliability of wind farms or photovoltaic parks, the use of the wind or the sun and the availability and supply of energy to the network are influenced by the reliability and repair time of the components and by the configuration of the connection electrical diagram itself. Like any electrical installation, wind farms or photovoltaic parks are exposed to component failure and external eventualities such as lightning strikes. The electrical switchgear that connects the wind turbines or solar panels to the electrical connection diagram of the electrical distribution network, and specifically the switching devices such as switches, shall act in the presence of a fault and, therefore, shall carry out the disconnection of a number of wind turbines or solar panels, depending on the type of failure. Once the fault is isolated and during the repair, the rest of the installation that has been disconnected will be reconnected and will transfer power to the network under normal conditions. However, the latter is not possible many times due to network settings. In certain diagrams, there are components in which the failure causes the disconnection of several branches of the electrical diagram of connection to the distribution power network during the entire time that the damaged element is being repaired, which causes a great loss of energy transferred to the network. This is the case, for example, of faults in the medium voltage distribution lines of indoor photovoltaic or wind installations, which are usually radial configurations, wherein said fault causes the disconnection of the entire generation line during the repair of the line stretch. In these cases, the repair time is very important, and it is desirable that it be the shortest possible time so that the energy not supplied to the network is also the least possible.

Another similar situation occurs during installation maintenance work. On many occasions, to carry them out, it is necessary to disconnect certain components and proceed to act on them. Thus, it is very important to have switching devices and connections that allow the generated energy to be recirculated and that render the impact of maintenance on the energy transferred as low as possible.

In the case of the riser unit, it allows the cables to be raised to the main busbar, providing them with greater mechanical protection. Therefore, this unit is used to connect a main busbar, either from another center, or because the output of the previous cell is lower by cable. In these cases, since the cell busbar is at the top and the cables are usually laid on the ground, the riser unit is added which protects and couples these cables to the busbar from the bottom. The riser unit can comprise an earthing switch that allows the downstream line section to be grounded to the next transformation center (for example, when there is a fault between two wind turbines, the affected area is isolated by grounding the line section on both sides), so that it is possible to work safely in case of having to act on said line to carry out fault repair or maintenance work. As mentioned above, the riser unit comprises a modular cell or enclosure that is installed together with the rest of the modular metallic enclosures inside the electrical power generation installations, such as the wind turbine tower, which leads to the aforementioned drawbacks related to space.

On the other hand, the circuit breaker protection unit is connected to the wind turbine transformer by means of cables that come from the same transformer, which can be in the upper or rear part of the installation, and that are connected to the protection unit by a cable connection point included in the lower part of said unit. Due to the scarcity of space inside wind turbine towers or photovoltaic installations, this connection of cables through the lower part of the protection unit can lead to certain inconveniences, such as, for example, the difficulty of connecting the cables if its minimum radius of curvature is complied with, a parameter that indicates the value at which a cable can be bent and that must be complied with to avoid damage to the cable itself. Likewise, the cost referring to cables shall be proportional to the meters of cable necessary to reach the connection point of cables of the protection unit, this cost being lower the less the distance between the connection point of cables of the protection unit and the transformer of the generation installation.

PCT patent application WO2014/201475 A1 relates to an insulated equipment to be used to connect between two ring-main feeders of the three-phase medium-voltage loop and one transformer feeder of the distribution substations or to the other circuit. Patent application DE102012215246 A1 relates to a pressure fluid-insulated switch panel having a pressure container which accommodates a switching device in its interior.
Patent application EP0224051 A1 relates to a gas insulated switchgear with multiple rotary three-position switches.

Finally, other examples of gas insulated switchgear equipment of the type used in wind or solar power plants are disclosed in the prior art documents *"*Lucy Electric: Sabre Ring Main Unit" (XP055773321), *"*Mesa: Celdas de distributión secundaria" (XP055773100), *"*Siemens: High Voltage Products/ Gas-insulated Switchgear" (XP055773101) and *"*ABB: Multifunktionale Schaltanlagen PASS M00 72,5 kV" (XP055773110).

### DESCRIPTION OF THE INVENTION

The invention relates to an electrical switchgear for application in electrical power generation installations, such as wind or photovoltaic parks, specifically in generation units, such as for example wind turbine towers or photovoltaic installations, which comprise their own transformation station equipped with the electrical switchgear object of the present invention. Therefore, hereinafter, each of the wind turbine towers or photovoltaic installations that comprise the electrical switchgear object of the invention shall be understood as a generation unit. This electrical switchgear allows the connection of the generation units to the electrical distribution network, the electrical connection diagram possibly being of the radial or single feeder type.

Depending on the position that the generation unit occupies in the electrical diagram of connection to the distribution network, that is, if it is, for example, a wind turbine tower or photovoltaic installation at the beginning or end of the line or whether it is a wind turbine tower or intermediate photovoltaic installation, the electrical switchgear may comprise at least one riser unit and a protection unit or it may comprise at least one riser unit, a line unit and a protection unit respectively. In both cases, all units are embedded in an enclosure, such as a metal enclosure, insulated in a dielectric fluid. The electrical switchgear of the invention comprises said enclosure that incorporates all the units inside, and may also comprise at least one cable connection point, one cable output point and at least one switching device that allows at least one of the following functions: connecting-breaking-disconnecting-earthing.

In this sense, an example of embodiment of the invention could comprise a cable output point with the possibility of having a first switching device such as an earthing switch that allows said output to be grounded, a second switching device such as a circuit breaker that allows protection, connecting and breaking functions, a third switching device such as a disconnector and earthing switch that allows connecting, disconnecting and grounding functions, and which is in series with the circuit breaker and fourth switching device such as a load break switch that allows breaking, connecting, disconnecting and grounding functions. Therefore, the electrical switchgear of the invention incorporates in a single enclosure or module the units that in the state of the art are incorporated in several modules or enclosures, thus avoiding problems of space and installation inside the generation units such as for example wind turbine towers.

In addition, the connection point of cables coming from the transformer of the generation unit, or upper connection, is located, as its name indicates, in the upper part of the enclosure, thus achieving significant cable savings, since the length of cable required to connect such a transformer to the electrical switchgear is shortened. Likewise, the installation of the cables becomes a simpler task since it does not imply the need for more space inside the generation unit, such as inside a wind turbine tower. It has been foreseen that said upper cable connection point can be covered by a housing, thus providing it with mechanical protection.

The enclosure of the electrical switchgear also includes in its lower part another cable connection point, or lower connection, coming from a previous generation unit, such as a previous wind turbine tower. Said enclosure can also be equipped on at least one of its sides with an output point for cables directed towards the next generation unit, such as the next wind turbine tower, for example, as well as with at least one connection element that allows the modular extension of the electrical switchgear, such as the coupling of an enclosure, measuring cell, auxiliary service cells or other breaking, connecting, disconnecting and grounding functions.

The cable connection points, the cable output point and the connection elements refer to bushings that are selected from female type, male type and combinations thereof and that are accessible from the outside of the enclosure.

The electrical switchgear object of the present invention can also comprise means of measurement, control and protection such as voltage sensors, voltage transformers, means for receiving/transmitting signals via PLC, means for detecting partial discharges, current sensors, etc. These means of measurement, control and protection, such as for example means that supply voltage and current values, such as, for example, inductive toroidal sensors for current measurement and resistive/capacitive sensors for voltage measurement, can be installed in the bushings which comprise the cable connection points, the cable output point and the aforementioned connection elements, in such a way that it is possible to measure the energy generated by each generation unit, the measurement of the energy in each of the branches of the radial electrical connection diagram of the generation units, as well as the voltage on the main busbar.

On the other hand, the enclosure comprises switching devices that make it possible to carry out connecting, breaking, disconnecting and grounding functions. In this way, the enclosure can comprise a circuit breaker with two switching positions, breaking and connecting, such as for example a vacuum circuit-breaker, which has the function of protecting the transformer of the generation unit. Likewise, the enclosure comprises a first disconnector and earthing switch with at least two switching positions, connecting, disconnecting and grounding, which once the circuit breaker is open allows grounding and isolating the incoming line of the generator unit transformer. The enclosure also includes a second earthing switch with two switching positions, open or grounded, which allows grounding or isolating the ground line leading to a subsequent generation unit, for example, when there is a fault between two generation units, the affected area is isolated by grounding the line section on both sides. Finally, for the case in which the generation unit is an intermediate unit, the enclosure also includes a load break switch with three switching positions, connecting, disconnecting and grounding, which allows the line input from the previous generation unit/s. The load break switch can be switched via remote control, so that from a generation unit the switching order can be sent to a load break switch installed in another generation unit, avoiding movements of operators from a generation unit to another and thus speeding up maintenance or repair work, the impact of said work on the energy transferred being the least possible.

The invention defines that the first disconnector and earthing switch and the second earthing switch are configured as a single switching device, that is, an earthing switch comprising at least one movable contact with rotary movement and that can electrically connect at least one pair of fixed contacts to each other, being able to connect the ground of both the line connection and the derivation to the transformer. In this case, the two-position circuit breaker (connecting - breaking) is electrically connected to the connection point of cables that come from the transformer of the generation unit and with said rotating earthing switch, this rotary earthing switch being in turn electrically connected to the three-position load break switch (connecting - disconnecting - grounding) and the latter electrically connected in turn to the connection point of cables coming from a previous generation unit or installation. Likewise, the rotary earthing switch and the load break switch are electrically connected with at least one cable output point that goes to a subsequent generation unit or installation, and with at least one connection element that allows modular extension of the electrical switchgear. In this electrical switchgear configuration, it has also been foreseen that all the switching devices are incorporated in an enclosure, or what is the same, the riser unit, the line unit and the protection unit are incorporated in a single enclosure or cell insulated in a dielectric fluid.
The scope of the present invention is defined by the claims.

### DESCRIPTION OF THE FIGURES

To complement the description and in order to help a better understanding of the features of the invention, according to several preferred examples of its practical embodiment, a set of figures is attached as an integral part of said description, in which, for illustrative and non-limiting purposes, the following has been represented:
Figure 1.- Shows a single-line diagram of the electrical switchgear according to the state of the art arranged in two generation units, such as two wind turbine towers.
Figure 2.- Shows a single-line diagram of the electrical switchgear arranged in several generation units, such as several wind turbine towers, according to an embodiment not part of the invention.
Figure 3.- Shows a single-line diagram of the electrical switchgear of the invention arranged in several generation units, such as several wind turbine towers, according to an embodiment of the invention.
Figure 4a.- Shows an elevation view of the electrical switchgear of the invention according to figure 2 or 3 arranged inside an enclosure.
Figure 4b.- Shows a right profile view of the electrical switchgear of the invention according to figure 2 or 3 arranged inside an enclosure.
Figure 4c.- Shows a left profile view of the electrical switchgear of the invention according to figure 2 or 3 arranged inside an enclosure.

### PREFERRED EMBODIMENT OF THE INVENTION

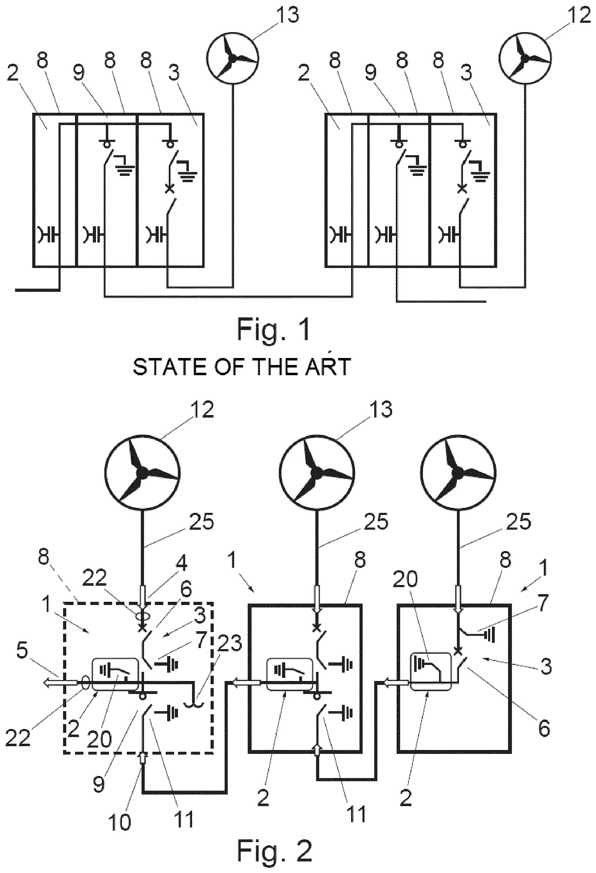

Figure 1 shows the electrical switchgear (1) according to the state of the art, which unlike the present invention comprises an enclosure (8) for each of the units (2, 3, 9).

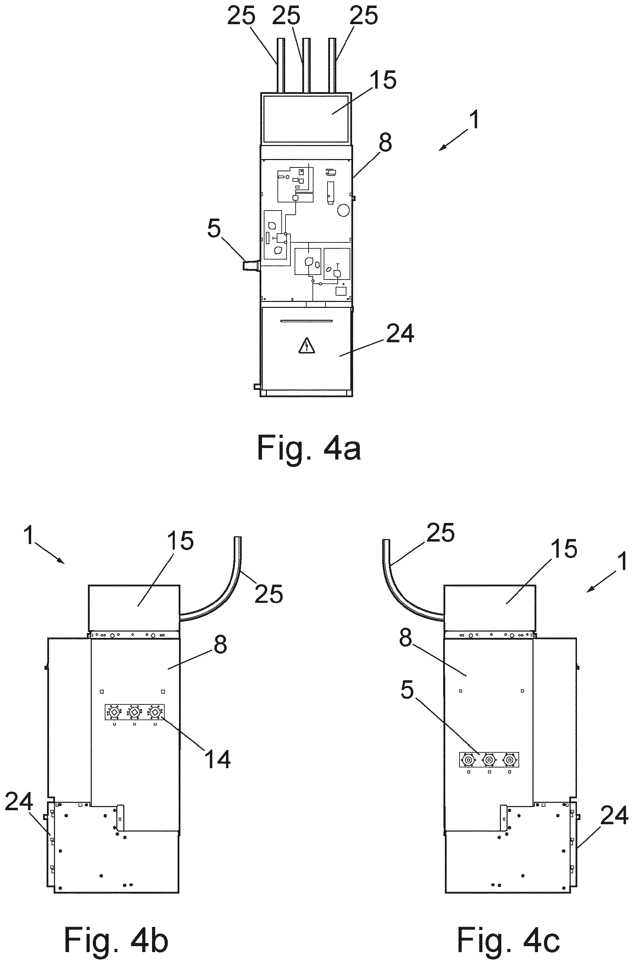

Figures 2, 4a, 4b and 4c show an electrical switchgear (1) for application in electrical power generation installations, specifically in generation units such as, for example, wind turbine towers (12, 13) that comprise their own transformation station equipped with said electrical switchgear (1).

The electrical switchgear (1) object of the present invention comprises at least one riser unit (2) and a protection unit (3) incorporated inside an enclosure (8), for example metallic, and insulated in a dielectric fluid, such as a gas or a mixture of gases, for the case in which the electrical switchgear (1) corresponds to a wind turbine tower at the end or at the beginning of the power line, as shown in figure 2, such as example in an electrical diagram of the radial or single feeder type.

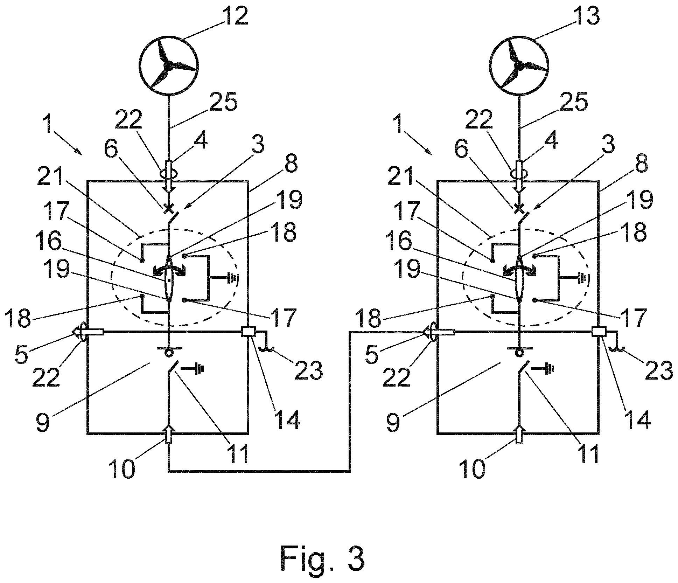

In the case of an intermediate wind turbine tower, as shown in Figures 2 and 3, the electrical switchgear (1) comprises an enclosure (8), for example of metal, which incorporates inside a riser unit (2 ), a line unit (9) and a protection unit (3) insulated in a dielectric fluid, such as a gas or a mixture of gases.

The electrical switchgear (1) of the invention comprises said enclosure (8) that incorporates inside all the units (2, 3, 9), and also comprises at least one connection point (4, 10) of cables, at least one cable output point (5) and at least one switching device (6, 7, 11, 20) that allows the connecting, breaking, disconnecting and grounding functions to be performed, as shown in figures 2, 4a , 4b and 4c, the first switching device (20) being an earthing switch, the second switching device (6) being a circuit breaker, the third switching device (7) being a disconnector and earthing switch and the fourth switching device (11) being a load break switch.

The upper connection point (4) of cables (25) coming from the wind turbine transformer (12, 13) is, as its name indicates, in the upper part of the enclosure (8), as shown in the figures 2 and 3, and said upper connection point (4) of cables (25) can be covered by a housing (15), as shown in Figures 4a, 4b and 4c. The lower connection point (10) of cables coming from the electrical switchgear (1) of a generation unit (13) prior to the generation unit (12) is, also as its name indicates, at the bottom of the enclosure (8), as shown in Figures 2 and 3, which can also be covered by a cover (24) as shown in Figures 4a, 4b and 4c. The housing (8) is also provided on at least one of its sides with the output point (5) of cables directed towards the next generation installation or unit, such as the next wind turbine tower, as shown, for example, in Figures 4a and 4c, as well as at least one connection element (14) that allows the modular extension of the electrical switchgear (1), such as for example the coupling of another measuring cell, as shown in Figure 4b. The upper and lower connection points (4, 10) of cables, the output point (5) of cables and the connection elements (14) can be bushings that are selected from female type, male type and combinations thereof and that are accessible from the outside of the enclosure (8), as shown in Figures 4a, 4b and 4c.

On the other hand, the electrical switchgear (1) of the invention may comprise means of measurement, control and protection (22, 23), such as inductive toroidal sensors (22) for current measurement, voltage transformers (23) for the voltage measurement, etc., as shown in figures 2 and 3, which can be installed in the same bushings that comprise the upper and lower connection points (4, 10) of cables, the outlet point (5 ) of cables and/or in the connection elements (14) that are accessible from outside the enclosure (8) of the electrical switchgear (1). In this way, for example, it is possible to measure the energy generated by each wind turbine, the measurement of the energy in each of the branches of the radial electrical connection diagram of the wind turbines, as well as the voltage in the main busbar.

Figure 2 shows a single-line diagram of the electrical switchgear (1) arranged in several generation units (12, 13) according to an embodiment not part of the invention. In this possible embodiment, the electrical switchgear (1) comprises switching devices (6, 7, 11, 20) with connecting, breaking, disconnecting and grounding functions, all of them arranged inside the same enclosure (8), thus including the riser unit (2) with the possibility of connecting to ground, the line unit (9) and the protection unit (8) in a single modular enclosure (8), to which, in case of need, other modular enclosures can be attached.

In this sense, in this embodiment, the enclosure (8) comprises a second switching device (6), such as a vacuum circuit breaker with two switching positions, connecting - breaking, which has the function of protecting the wind turbine transformer (12, 13). Likewise, the enclosure (8) comprises inside the third switching device (7) that comprises a first disconnector and earthing switch with at least two switching positions, connecting - disconnecting - grounding, which once the circuit breaker is opened, the second switching device (6) allows grounding and isolating the line coming from the wind turbine transformer (12, 13). As shown in figure 2, the enclosure (8) also includes inside the first switching device (20) comprising a second earthing switch with two switching positions, connecting - grounding, which allows grounding and isolating the line that goes to a downstream wind turbine in the electrical connection diagram to the distribution network. Finally, in the case in which the wind turbine tower is an intermediate tower, the enclosure (8) comprises inside the fourth switching device (11) that comprises a load break switch with three switching positions, connecting - disconnecting - grounding, which allows the line input coming from the previous wind turbine tower, or from the previous wind turbine towers.

Regarding figure 3, it shows a single-line diagram of the electrical switchgear (1) arranged in several wind turbine towers (12, 13) according to an embodiment of the invention. In this embodiment of the invention, the enclosure (8), instead of comprising the third switching device (7) and the first switching device (20), comprises a switching device (21) comprising at least one movable contact (16) with rotary movement that can electrically connect at least one pair of fixed contacts (17, 18, 19) to each other, so that it is a switching device (21) with three switching positions, connecting - grounding - grounding, that is, it allows the wind turbine tower (12, 13) to be connected to the distribution network, isolate and ground said wind turbine tower (12, 13), or isolate and ground the line that exits towards a subsequent wind turbine tower, that is, even if said figure 3 does not show the numerical reference (2) referring to the riser unit which in the embodiment not according to the invention comprises a first switching device (20) such as an earthing switch, the switching device (21) of this embodiment according to the invention also comprises the earthing switch function. The enclosure (8), in addition to this switching device (21), also comprises the second switching device (6), such as a two-position vacuum break switch, connecting - breaking, which has the function of protecting the transformer from the wind turbine (12, 13), and the fourth switching device (11) comprising a load break switch with three switching positions, connecting - disconnecting - grounding, that allows the line input from the previous wind turbine tower, or from the previous wind turbine towers. Therefore, the second switching device (6) is electrically connected to the upper connection point (4) of cables (25) and to the switching device (21), said switching device (21) being in turn electrically connected to the fourth switching device (11) and said fourth switching device (11) electrically connected in turn to the lower connection (10) of cables. The switching device (21) and the fourth switching device (11) are electrically connected to the cable output point (5).

## Claims

1. Electrical switchgear (1) for electrical power generation installations comprising at least one riser unit (2) and a protection unit (3), the electrical switchgear (1) comprising:
- at least one upper connection point (4) of cables (25),
- at least one cable output point (5),
- at least one switching device (6, 7, 20) that allows at least one of the following functions: connecting-breaking-disconnecting-earthing, and
- an enclosure (8) that incorporates the riser unit (2) and the protection unit (3) insulated in a dielectric fluid;
wherein a first switching device (20) comprises an earthing switch with two switching positions, connecting and grounding,
a second switching device (6) comprises a circuit breaker with two switching positions, breaking and connecting, and
a third switching device (7) comprises a disconnector and earthing switch with at least two switching positions, connecting, disconnecting and grounding,
**characterized in that** the third switching device (7) and the first switching device (20) are configured as a single switching device (21) comprising at least one movable contact (16) with rotary movement that can electrically connect at least one pair of fixed contacts (17, 18, 19) to each other, so that it is a switching device (21) with three switching positions, connecting - grounding - grounding.

2. Electrical switchgear (1) according to claim 1, **characterized in that** it comprises at least one line unit (9), this line unit (9) comprising:
- at least one lower connection point (10) of cables, and
- at least one switching device (11) with connecting, breaking, disconnecting and grounding functions,
wherein the enclosure (8) incorporates the riser unit (2), the line unit (9) and the protection unit (3) isolated in a dielectric fluid.

3. Electrical switchgear (1) according to claim 1 or 2, **characterized in that** the upper connection point (4) of cables (25) coming from the transformer of at least one generation unit (12, 13) is located in the upper part of the enclosure (8).

4. Electrical switchgear (1) according to claim 3, **characterized in that** the upper connection point (4) of cables (25) coming from the transformer of the generation unit (12, 13) is covered by a housing (15).

5. Electrical switchgear (1) according to claim 3, **characterized in that** the enclosure (8) comprises in its lower part the lower connection point (10) of cables from a previous generation unit (13).

6. Electrical switchgear (1) according to any of the preceding claims, **characterized in that** it comprises at least one connection element (14) on at least one side of the enclosure (8) that allows the modular extension of the electrical switchgear (1).

7. Electrical switchgear (1) according to claim 6, **characterized in that** the upper and lower connection points (4, 10) of cables, the output point (5) of cables and the connection elements (14) are bushings that are selected from female type, male type and combinations thereof.

8. Electrical switchgear (1) according to claim 7, **characterized in that** the upper and lower connection points (4, 10) of cables, the output point (5) of cables and the connection elements (14) are accessible from the outside of the enclosure (8).

9. Electrical switchgear (1) according to claim 1, **characterized in that** the enclosure (8) comprises inside a fourth switching device (11) comprising a load break switch with three switching positions, connecting, disconnecting and grounding.

10. Electrical switchgear (1) according to claim 9, **characterized in that** the second switching device (6) is electrically connected to the upper connection point (4) of cables (25) and to the switching device (21), said switching device (21) being in turn electrically connected to the fourth switching device (11) and this last switching device (11) electrically connected in turn with the lower connection point (10) of cables.

11. Electrical switchgear (1) according to claim 10, **characterized in that** the switching device (21) and the fourth switching device (11) are electrically connected to the cable output point (5).

12. Electrical switchgear (1) according to any of the preceding claims, **characterized in that** it comprises measurement, control and protection devices (22, 23).

## Patentansprüche

1. Elektrische Schaltanlage (1) für elektrische Energieerzeugungsanlagen, die mindestens eine Steigleitungseinheit (2) und eine Schutzeinheit (3) umfasst, wobei die elektrische Schaltanlage (1) umfasst:
- mindestens einen oberen Anschlusspunkt (4) für Kabel (25)
- mindestens einen Kabelausgabepunkt (5),
- mindestens eine Schalteinrichtung (6, 7, 20), die mindestens eine der folgenden Funktionen ermöglicht: Verbinden - Unterbrechen - Trennen - Erden, und
- ein Gehäuse (8), in dem die Steigleitungseinheit (2) und die Schutzeinheit (3) in einem dielektrischen Fluid isoliert sind;
wobei eine erste Schalteinrichtung (20) einen Erdungsschalter mit zwei Schaltstellungen, Verbinden und Erden, umfasst,
eine zweite Schalteinrichtung (6) einen Leistungsschalter mit zwei Schaltstellungen, Unterbrechung und Verbindung, umfasst, und
eine dritte Schalteinrichtung (7) einen Trenn- und Erdungsschalter mit mindestens zwei Schaltstellungen, die Verbinden, Trennen und Erden, umfasst
**dadurch gekennzeichnet,**
**dass** die dritte Schalteinrichtung (7) und die erste Schalteinrichtung (20) als eine einzige Schalteinrichtung (21) konfiguriert sind, die mindestens einen beweglichen Kontakt (16) mit Drehbewegung umfasst, der mindestens ein Paar von festen Kontakten (17, 18, 19) elektrisch miteinander verbinden kann, so dass es sich um eine Schalteinrichtung (21) mit drei Schaltpositionen, Verbinden - Erden - Erden handelt

2. Elektrische Schaltanlage (1) nach Anspruch 1, **dadurch gekennzeichnet, dass** sie mindestens eine Leitungseinheit (9) umfasst, wobei diese Leitungseinheit (9) umfasst:
- mindestens einen unteren Anschlusspunkt (10) für Kabel, und
- mindestens eine Schalteinrichtung (11) mit den Funktionen Verbinden, Unterbrechen, Trennen und Erden,
wobei das Gehäuse (8) die Steigleitungseinheit (2), die Leitungseinheit (9) und die Schutzeinheit (3) umfasst, die in einem dielektrischen Fluid isoliert sind.

3. Elektrische Schaltanlage (1) nach Anspruch 1 oder 2, **dadurch gekennzeichnet, dass** sich der obere Anschlusspunkt (4) von Kabeln (25), die vom Transformator mindestens einer Erzeugungseinheit (12, 13) kommen, im oberen Teil des Gehäuses (8) befindet.

4. Elektrische Schaltanlage (1) nach Anspruch 3, **dadurch gekennzeichnet, dass** der obere Anschlusspunkt (4) von Kabeln (25), die vom Transformator der Erzeugungseinheit (12, 13) kommen, durch ein Gehäuse (15) abgedeckt ist.

5. Elektrische Schaltanlage (1) nach Anspruch 3, **dadurch gekennzeichnet, dass** das Gehäuse (8) in seinem unteren Teil den unteren Anschlusspunkt (10) von Kabeln einer vorherigen Erzeugungseinheit (13) aufweist

6. Elektrische Schaltanlage (1) nach einem der vorhergehenden Ansprüche, **dadurch gekennzeichnet, dass** sie mindestens ein Verbindungselement (14) an mindestens einer Seite des Gehäuses (8) aufweist, das die modulare Erweiterung der elektrischen Schaltanlage (1) ermöglicht.

7. Elektrische Schaltanlage (1) nach Anspruch 6, **dadurch gekennzeichnet, dass** der obere und untere Anschlusspunkt (4, 10) von Kabeln, der Kabelausgabepunkt (5) und die Anschlusselemente (14) Buchsentypen sind, ausgewählt aus männlichem Typ, weiblichem Typ und Kombinationen davon.

8. Elektrische Schaltanlage (1) nach Anspruch 7, **dadurch gekennzeichnet, dass** der obere und untere Anschlusspunkt (4, 10) für Kabel, der Kabelausgabepunkt (5) und die Anschlusselemente (14) von der Außenseite des Gehäuses (8) zugänglich sind.

9. Elektrische Schaltanlage (1) nach Anspruch 1, **dadurch gekennzeichnet, dass** das Gehäuse (8) im Inneren eine vierte Schalteinrichtung (11) aufweist, die einen Lasttrennschalter mit drei Schaltstellungen, Verbinden, Trennen und Erden, umfasst

10. Elektrische Schaltanlage (1) nach Anspruch 9, **dadurch gekennzeichnet, dass** die zweite Schalteinrichtung (6) mit dem oberen Anschlusspunkt (4) von Kabeln (25) und mit der Schalteinrichtung (21) elektrisch verbunden ist, wobei die Schalteinrichtung (21) ihrerseits mit der vierten Schalteinrichtung (11) elektrisch verbunden ist und diese letzte Schalteinrichtung (11) ihrerseits mit dem unteren Anschlusspunkt (10) von Kabeln elektrisch verbunden ist

11. Elektrische Schaltanlage (1) nach Anspruch 10, **dadurch gekennzeichnet, dass** die Schalteinrichtung (21) und die vierte Schalteinrichtung (11) elektrisch mit dem Kabelausgabepunkt (5) verbunden sind.

12. Elektrische Schaltanlage (1) nach einem der vorhergehenden Ansprüche, **dadurch gekennzeichnet, dass** sie Mess-, Steuer- und Schutzeinrichtungen (22, 23) umfasst

## Revendications

1. Appareillage de commutation électrique (1) pour des installations de production d'énergie électrique comprenant au moins une unité montante (2) et une unité de protection (3), l'appareillage de commutation électrique (1) comprenant :
- au moins un point de connexion supérieur (4) de câbles (25),
- au moins un point de sortie (5) de câbles,
- au moins un dispositif de commutation (6, 7, 20) qui permet au moins l'une des fonctions suivantes : une connexion - une coupure - une déconnexion - une mise à la terre, et
- une enceinte (8) qui incorpore l'unité montante (2) et l'unité de protection (3) isolées dans un fluide diélectrique ;
dans lequel un premier dispositif de commutation (20) comprend un commutateur de mise à la terre avec deux positions de commutation, connexion et mise à la terre, un deuxième dispositif de commutation (6) comprend un disjoncteur avec deux positions de commutation, coupure et connexion, et
un troisième dispositif de commutation (7) comprend un sectionneur et un commutateur de mise à la terre avec au moins deux positions de commutation, connexion, déconnexion et mise à la terre,
**caractérisé en ce que** le troisième dispositif de commutation (7) et le premier dispositif de commutation (20) sont configurés comme un seul dispositif de commutation (21) comprenant au moins un contact mobile (16) à mouvement rotatif qui peut connecter électriquement au moins une paire de contacts fixes (17, 18, 19) l'un à l'autre, de sorte qu'il s'agit d'un dispositif de commutation (21) avec trois positions de commutation, connexion - mise à la terre - mise à la terre.

2. Appareillage de commutation électrique (1) selon la revendication 1, **caractérisé en ce qu'**il comprend au moins une unité de ligne (9), cette unité de ligne (9) comprenant :
- au moins un point de connexion inférieur (10) de câbles, et
- au moins un dispositif de commutation (11) avec des fonctions de connexion, de coupure, de déconnexion et de mise à la terre,
dans lequel l'enceinte (8) incorpore l'unité montante (2), l'unité de ligne (9) et l'unité de protection (3) isolées dans un fluide diélectrique.

3. Appareillage de commutation électrique (1) selon la revendication 1 ou 2, **caractérisé en ce que** le point de connexion supérieur (4) de câbles (25) provenant du transformateur d'au moins une unité de production (12, 13) est situé dans la partie supérieure de l'enceinte (8) .

4. Appareillage de commutation électrique (1) selon la revendication 3, **caractérisé en ce que** le point de connexion supérieur (4) de câbles (25) provenant du transformateur de l'unité de production (12, 13) est recouvert par un boîtier (15).

5. Appareillage de commutation électrique (1) selon la revendication 3, **caractérisé en ce que** l'enceinte (8) comprend dans sa partie inférieure le point de connexion inférieur (10) de câbles provenant d'une unité de production (13) précédente.

6. Appareillage de commutation électrique (1) selon l'une quelconque des revendications précédentes, **caractérisé en ce qu'**il comprend au moins un élément de connexion (14) sur au moins un côté de l'enceinte (8) qui permet l'extension modulaire de l'appareillage de commutation électrique (1).

7. Appareillage de commutation électrique (1) selon la revendication 6, **caractérisé en ce que** les points de connexion supérieur et inférieur (4, 10) de câbles, le point de sortie (5) de câbles et les éléments de connexion (14) sont des douilles qui sont sélectionnées parmi un type femelle, un type mâle et des combinaisons de ceux-ci.

8. Appareillage de commutation électrique (1) selon la revendication 7, **caractérisé en ce que** les points de connexion supérieur et inférieur (4, 10) des câbles, le point de sortie (5) de câbles et les éléments de connexion (14) sont accessibles depuis l'extérieur de l'enceinte (8).

9. Appareillage de commutation électrique (1) selon la revendication 1, **caractérisé en ce que** l'enceinte (8) comprend à l'intérieur un quatrième dispositif de commutation (11) comprenant un interrupteur coupe-charge avec trois positions de commutation, connexion, déconnexion et mise à la terre.

10. Appareillage de commutation électrique (1) selon la revendication 9, **caractérisé en ce que** le deuxième dispositif de commutation (6) est connecté électriquement au point de connexion supérieur (4) de câbles (25) et au dispositif de commutation (21), ledit dispositif de commutation (21) étant à son tour connecté électriquement au quatrième dispositif de commutation (11) et ce dernier dispositif de commutation (11) étant connecté électriquement à son tour au point de connexion inférieur (10) de câbles.

11. Appareillage de commutation électrique (1) selon la revendication 10, **caractérisé en ce que** le dispositif de commutation (21) et le quatrième dispositif de commutation (11) sont connectés électriquement au point de sortie (5) de câbles.

12. Appareillage de commutation électrique (1) selon l'une quelconque des revendications précédentes, **caractérisé en ce qu'**il comprend des dispositifs de mesure, de contrôle et de protection (22, 23).
